# FASCICULE DE BREVET EUROPEEN

(11) **EP 4 623 764 B1**
(45) Date de publication et mention de la délivrance du brevet: **15.07.2026**
(21) Numéro de dépôt: 25158589.9
(22) Date de dépôt: 18.02.2025
(51) Int. Cl.: A47J 27/21, A47J 31/20, A47J 31/44

(54) **MACHINE À INFUSER ÉLECTRIQUE COMPRENANT UN ACCESSOIRE D'INFUSION ÉQUIPÉ D'UN ORGANE DE PRÉHENSION**
ELEKTRISCHE BRÜHMASCHINE MIT EINEM INFUSIONSZUBEHÖR MIT EINEM GREIFORGAN
ELECTRIC BREWING MACHINE COMPRISING AN INFUSION ACCESSORY EQUIPPED WITH A GRIPPING MEMBER

(30) Priorité: 27.03.2024 FR 2403080
(43) Date de publication de la demande: 01.10.2025
(73) Titulaire: SEB S.A., 69130 Ecully (FR)
(72) Inventeur: ALLEMAND, Bernard, 69134 Ecully Cedex (FR); MANSEAU, Charles, 69134 Ecully Cedex (FR); SMAL, Chloé, 69134 Ecully Cedex (FR)
(74) Mandataire: SEB Développement

(56) Documents cités:
- EP-A1- 4 306 011
- WO-A1-2021/022815
- CN-A- 108 245 014
- FR-A1- 3 120 184
- US-A1- 2012 216 682

## Description

### Domaine technique

La présente invention concerne le domaine des machines à infuser électriques, et en particulier des bouilloires électriques et des théières électriques.

### Etat de la technique

Une machine à infuser électrique comprend de façon connue :
- un contenant délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à un axe longitudinal central du contenant,
- un accessoire d'infusion, tel qu'un panier à infuser, comprenant un corps principal configuré pour être disposé au moins en partie dans le volume interne du contenant, le corps principal délimitant un volume d'infusion configuré pour contenir un produit à infuser, et comportant une ouverture supérieure à travers laquelle le produit à infuser est apte à être introduit dans le volume d'infusion, et
- un couvercle configuré pour recouvrir l'accessoire d'infusion et pour fermer le contenant.

Afin de faciliter le retrait de l'accessoire d'infusion hors du contenant, l'accessoire d'infusion est avantageusement pourvu d'une partie de préhension apte à être manipulée par un utilisateur.

La partie de préhension est plus particulièrement configurée pour être intégralement disposée dans le volume interne délimité par le contenant, et donc pour être située sous le couvercle.

Afin d'une part de limiter la contamination de l'eau par d'éventuels contaminants présents sur la partie de préhension et d'autre part de limiter les risques de brûlure d'un utilisateur lors du retrait de l'accessoire d'infusion hors du contenant, il est préférable que la partie de préhension équipant l'accessoire d'infusion puisse être maintenue en dehors de l'eau contenue dans le contenant, y compris lorsque ce dernier est rempli jusqu'à son niveau de remplissage maximal.

Or, afin de respecter les deux critères précités avec un accessoire d'infusion équipé d'une partie de préhension disposée dans une partie supérieure de l'accessoire d'infusion et destinée à être située intégralement sous le couvercle, il est nécessaire soit d'augmenter la hauteur du contenant, ce qui nuit à l'encombrement en hauteur de ce dernier, soit de réduire la taille de la partie de préhension, ce qui nuit à la maniabilité de l'accessoire d'infusion. Le document CN108245014A divulgue une machine à infuser électrique.

### Résumé de l'invention

La présente invention vise à remédier à tout ou partie de ces inconvénients.

Le problème technique à la base de l'invention consiste notamment à fournir une machine à infuser électrique qui soit de structure simple, ergonomique et économique, tout en présentant une grande sécurité d'utilisation.

A cet effet, la présente invention concerne une machine à infuser électrique, et en particulier une bouilloire électrique ou une théière électrique, comprenant :
- un contenant délimitant un volume interne destiné à contenir de l'eau et dans lequel l'eau est destinée à être chauffée, le contenant comprenant un bord périphérique supérieur délimitant une ouverture de remplissage supérieure débouchant dans le volume interne,
- une poignée de préhension fixée au contenant,
- un bec verseur,
- un accessoire d'infusion, tel qu'un panier à infuser, qui est amovible par rapport au contenant, l'accessoire d'infusion comprenant :
   ∘ un corps principal configuré pour être disposé au moins en partie dans le volume interne du contenant, le corps principal délimitant un volume d'infusion configuré pour contenir un produit à infuser, tel que du thé, du café ou des plantes, et
   ∘ un organe de préhension fixé à une partie supérieure du corps principal et comprenant une partie de préhension configurée pour permettre à un utilisateur de manipuler l'accessoire d'infusion, et par exemple de retirer l'accessoire d'infusion hors du contenant, et
- un couvercle configuré pour occuper une position de fermeture dans laquelle le couvercle ferme le contenant et recouvre au moins en partie l'accessoire d'infusion, le couvercle comprenant une face inférieure configurée pour être située en regard du corps principal de l'accessoire d'infusion,
la partie de préhension est configurée pour être située au moins en partie à l'extérieur de la machine à infuser électrique, c'est-à-dire pour être accessible depuis l'extérieur de la machine à infuser électrique, lorsque le couvercle occupe la position de fermeture, l'organe de préhension comporte une partie de liaison fixée à la partie supérieure du corps principal et reliant mécaniquement la partie de préhension au corps principal, la partie de liaison étant configurée pour s'étendre entre le couvercle et le contenant lorsque le couvercle occupe la position de fermeture, et la machine à infuser électrique comporte un dispositif d'étanchéité configuré pour coopérer de manière étanche avec le contenant et l'organe de préhension lorsque le couvercle occupe la position de fermeture, caractérisé en ce que le contenant comporte un évidement de réception configuré pour loger au moins partiellement la partie de liaison.

Une telle configuration de l'organe de préhension, et en particulier le fait que la partie de préhension soit située à l'extérieur de la machine à infuser électrique et donc à distance de l'eau à température élevée contenue dans le contenant, limite sensiblement les risques de brûlure d'un utilisateur lors du retrait de l'accessoire d'infusion hors du contenant.

En outre, la configuration spécifique du dispositif d'étanchéité réduit sensiblement les risques d'écoulement d'eau bouillante à l'extérieur du contenant par exemple en cas de renversement du contenant (en raison du fait que le dispositif d'étanchéité est apte à coopérer de manière étanche avec l'organe de préhension).

La machine à infuser électrique peut en outre présenter une ou plusieurs des caractéristiques suivantes, prises seules ou en combinaison.

Selon un mode de réalisation de l'invention, le corps principal comporte une partie d'appui, par exemple annulaire, configurée pour reposer sur une partie de retenue, par exemple annulaire, prévue sur le contenant.

Selon un mode de réalisation de l'invention, la partie d'appui est configurée pour s'étendre sensiblement perpendiculairement à un axe longitudinal central du contenant lorsque la partie d'appui repose sur la partie de retenue.

Selon un mode de réalisation de l'invention, la partie d'appui est en appui étanche contre la partie de retenue lorsque l'accessoire d'infusion est associé au contenant et que le couvercle est en position de fermeture.

Selon un mode de réalisation, la partie d'appui comprend un épaulement propre à coopérer avec la partie de retenue lorsque l'accessoire d'infusion est associé au contenant et à assurer une étanchéité entre la partie d'appui et la partie de retenue notamment lorsque le couvercle est en position de fermeture.

Selon un mode de réalisation de l'invention, le couvercle est propre à exercer un effort d'appui sur le corps principal lorsque le couvercle est en position de fermeture, de telle sorte que la partie d'appui exerce un effet d'appui contre la partie de retenue.

Selon un mode de réalisation de l'invention, le dispositif d'étanchéité comporte un premier joint d'étanchéité annulaire et un deuxième joint d'étanchéité annulaire qui sont configurés pour être décalés l'un par rapport à l'autre selon un axe longitudinal central du contenant lorsque le couvercle occupe la position de fermeture. Une telle configuration du dispositif d'étanchéité limite encore les risque d'écoulement d'eau entre le couvercle et le contenant par exemple en cas de renversement du contenant.

Selon un mode de réalisation de l'invention, le premier joint d'étanchéité annulaire et le deuxième joint d'étanchéité annulaire sont fixés au couvercle.

Selon un mode de réalisation de l'invention, le premier joint d'étanchéité annulaire est fixé à une partie inférieure du couvercle, et le deuxième joint d'étanchéité annulaire est fixé à une partie supérieure du couvercle.

Selon un mode de réalisation de l'invention, le premier joint d'étanchéité annulaire s'étend autour de la partie inférieure du couvercle, et le deuxième joint d'étanchéité annulaire s'étend autour de la partie inférieure du couvercle.

Selon un mode de réalisation de l'invention, le premier joint d'étanchéité annulaire et le deuxième joint d'étanchéité annulaire s'étendent sensiblement coaxialement l'un par rapport à l'autre, et par exemple sensiblement coaxialement à un axe central du couvercle.

Selon un mode de réalisation de l'invention, le premier joint d'étanchéité annulaire est configuré pour coopérer de manière étanche avec le corps principal de l'accessoire d'infusion, et par exemple avec la partie d'appui prévue sur le corps principal, lorsque le couvercle occupe la position de fermeture, et le deuxième joint d'étanchéité annulaire est configuré pour coopérer de manière étanche avec le contenant et l'organe de préhension, et par exemple la partie de liaison ou la partie de préhension, lorsque le couvercle occupe la position de fermeture. Une telle configuration du dispositif d'étanchéité limite encore les risque d'écoulement d'eau entre le couvercle et le contenant par exemple en cas de renversement du contenant.

Selon un mode de réalisation de l'invention, le deuxième joint d'étanchéité annulaire est configuré pour coopérer de manière étanche avec le bord périphérique supérieur du contenant et l'organe de préhension lorsque le couvercle occupe la position de fermeture.

Selon un mode de réalisation de l'invention, l'organe de préhension présente une forme générale en L.

Selon un mode de réalisation de l'invention, l'organe de préhension, et par exemple la partie de préhension, est configuré pour s'étendre entre le couvercle et le bord périphérique supérieur du contenant.

Selon un mode de réalisation de l'invention, la partie de liaison est configurée pour s'étendre au moins partiellement entre une surface périphérique externe du couvercle et une surface périphérique interne du contenant.

Selon l'invention, le contenant comporte un évidement de réception configuré pour loger au moins partiellement la partie de liaison. En d'autres termes, le contenant comporte une zone de réception en creux configurée pour loger au moins partiellement la partie de liaison. La disposition de la partie de liaison dans un tel évidement de réception permet de positionner le couvercle au plus près du contenant, et limite donc encore les risques d'écoulement d'eau entre le couvercle et le contenant par exemple en cas de renversement du contenant.

De façon avantageuse, l'évidement de réception est prévu dans une partie arrière du contenant, et par exemple à proximité de la poignée de préhension.

Selon un mode de réalisation de l'invention, l'évidement de réception débouche au moins en partie dans une surface périphérique interne du contenant configurée pour être située en regard d'une surface périphérique externe du couvercle lorsque le couvercle occupe la position de fermeture.

Selon un mode de réalisation de l'invention, l'évidement de réception débouche au moins en partie dans le bord périphérique supérieur du contenant.

Selon un mode de réalisation de l'invention, la partie de liaison est configurée pour s'étendre sensiblement verticalement lorsque le contenant repose sur une surface horizontale.

Selon un mode de réalisation de l'invention, l'évidement de réception comporte une première partie de réception débouchant dans la surface périphérique interne du contenant, et une deuxième partie de réception débouchant dans le bord périphérique supérieur du contenant. La première partie de réception est par exemple configurée pour loger au moins partiellement la partie de liaison, et la deuxième partie de réception est par exemple configurée pour loger partiellement la partie de préhension.

Selon un mode de réalisation de l'invention, la partie de liaison est configurée pour être sensiblement affleurante ou pour être située en retrait de la surface périphérique interne du contenant.

Selon un mode de réalisation de l'invention, la portion de la partie de préhension logée dans l'évidement de réception, et par exemple dans la deuxième partie de réception, est configurée pour être sensiblement affleurante ou pour être située en retrait du bord périphérique supérieur du contenant.

Selon un mode de réalisation de l'invention, l'évidement de réception comprend un joint d'étanchéité additionnel propre à coopérer avec l'organe de préhension lorsque l'accessoire d'infusion est associé au contenant.

Selon un mode de réalisation de l'invention, la partie de préhension est une patte de préhension.

Selon un mode de réalisation de l'invention, le couvercle comporte une surface d'appui annulaire contre laquelle prend appui le deuxième joint d'étanchéité annulaire, la surface d'appui annulaire étant configurée pour être orientée vers le bord périphérique supérieur du contenant lorsque le couvercle occupe la position de fermeture.

Selon un mode de réalisation de l'invention, l'organe de préhension est configuré pour s'étendre au moins en partie entre la surface d'appui annulaire prévue sur le couvercle et le bord périphérique supérieur du contenant.

Selon un mode de réalisation de l'invention, le deuxième joint d'étanchéité annulaire est configuré pour prendre appui sur l'organe de préhension, et par exemple sur la partie de préhension.

Selon un mode de réalisation de l'invention, la partie de préhension est configurée pour s'étendre vers l'arrière de la machine à infuser électrique, et par exemple à l'opposé du bec verseur.

Selon un mode de réalisation de l'invention, le contenant présente un axe longitudinal central, et le bec verseur est configuré pour être situé à l'opposé de la poignée de préhension par rapport à l'axe longitudinal central du contenant.

Selon un mode de réalisation de l'invention, l'accessoire d'infusion comporte une ouverture supérieure à travers laquelle le produit à infuser est apte à être introduit dans le volume d'infusion.

Selon un mode de réalisation de l'invention, la partie de préhension est configurée pour être décalée latéralement par rapport à l'ouverture supérieure. Une telle configuration du dispositif de préhension assure une introduction aisée du produit à infusant dans le volume d'infusion (et également un retrait aisé du produit infusé hors du volume d'infusion).

Selon un mode de réalisation de l'invention, le corps principal comporte une partie d'infusion délimitant le volume d'infusion. De façon avantageuse, la partie d'infusion présente une forme globalement cylindrique.

Selon un mode de réalisation de l'invention, la machine à infuser électrique comporte un dispositif d'indexage angulaire, également nommé dispositif de détrompage, configuré pour indexer angulairement l'accessoire d'infusion par rapport au contenant, de manière à définir une unique position de retenue de l'accessoire d'infusion sur le contenant.

Selon un mode de réalisation de l'invention, la machine à infuser électrique comporte un circuit d'évacuation de vapeur configuré pour convoyer, à l'extérieur du volume interne et par exemple vers l'extérieur de la machine à infuser électrique, de la vapeur générée dans le volume interne lors d'une ébullition de l'eau contenue dans le volume interne.

Selon un mode de réalisation de l'invention, le circuit d'évacuation de vapeur comporte :
- un premier orifice d'admission de vapeur et un deuxième orifice d'admission de vapeur qui sont prévus sur le couvercle et qui débouchent dans la face inférieure du couvercle, les premier et deuxième orifices d'admission de vapeur étant configurés pour être reliés fluidiquement au volume interne délimité par le contenant, et par exemple pour être situés au-dessus d'un niveau de remplissage maximal du contenant, et pour être disposés de part et d'autre d'un plan vertical médian de la machine à infuser électrique qui passe par la poignée de préhension,
- une chambre interne délimitée par le couvercle, et
- un premier conduit d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième conduit d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne.

Selon un mode de réalisation de l'invention, les premier et deuxième conduits d'écoulement de vapeur forment un dispositif anti-déversement, également nommé dispositif anti-débordement, configuré pour empêcher un déversement de l'eau contenue dans le volume interne via le circuit d'évacuation de vapeur lorsque la machine à infuser électrique est renversée.

Selon un mode de réalisation de l'invention, le circuit d'évacuation de vapeur comporte au moins une ouverture d'évacuation de vapeur, et par exemple une ou plusieurs ouverture(s) d'évacuation de vapeur, prévue sur le couvercle et reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la machine à infuser électrique.

Selon un mode de réalisation de l'invention, l'au moins une ouverture d'évacuation de vapeur est configurée pour être située à proximité du bec verseur.

Selon un mode de réalisation de l'invention, la machine à infuser électrique est configurée de telle sorte que, lorsque la machine à infuser électrique est renversée et que la poignée de préhension et un premier côté latéral du contenant reposent de manière stable sur une surface horizontale, le premier orifice d'admission de vapeur est situé au-dessus du niveau d'eau dans le volume interne, et de telle sorte que, lorsque la machine à infuser électrique est renversée et que la poignée de préhension et un deuxième côté latéral du contenant reposent de manière stable sur une surface horizontale, le deuxième orifice d'admission de vapeur est situé au-dessus du niveau d'eau dans le volume interne. Ainsi, la machine à infuser électrique selon la présente invention permet d'éviter ou du moins de limiter considérablement les risques d'écoulement d'eau bouillante hors de la machine à infuser électrique en cas de renversement de cette dernière.

Selon un mode de réalisation de l'invention, la machine à infuser électrique est configurée de telle sorte que, lorsque la machine à infuser électrique est renversée et que la poignée de préhension et un premier côté latéral du contenant reposent de manière stable sur une surface horizontale, le premier orifice d'admission de vapeur et la deuxième ouverture de sortie de vapeur sont situés au-dessus du niveau d'eau dans le volume interne, et de telle sorte que, lorsque la machine à infuser électrique est renversée et que la poignée de préhension et un deuxième côté latéral du contenant reposent de manière stable sur une surface horizontale, le deuxième orifice d'admission de vapeur et la première ouverture de sortie de vapeur sont situés au-dessus du niveau d'eau dans le volume interne.

Selon un mode de réalisation de l'invention, les première et deuxième ouvertures de sortie de vapeur sont configurées pour être disposées de part et d'autre du plan vertical médian de la machine à infuser électrique.

Selon un autre mode de réalisation de l'invention, les première et deuxième ouvertures de sortie de vapeur sont situées dans une moitié arrière de la chambre interne. Une telle disposition des première et deuxième ouvertures de sortie de vapeur limite les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la machine à infuser électrique. En outre, lorsque la machine à infuser électrique comprend un système de contrôle électromécanique, une telle architecture permet de faciliter le transfert de la vapeur vers la poignée de préhension et vers un système de contrôle électromécanique de la machine à infuser électrique situé en partie basse et propre à désactiver la chauffe de la machine à infuser électrique lorsqu'il détecte de la vapeur.

Selon un mode de réalisation de l'invention, les première et deuxième ouvertures de sortie de vapeur sont configurées pour être orientées à l'opposé du bec verseur, c'est-à-dire vers l'arrière de la machine à infuser électrique. Ces dispositions limitent encore les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la machine à infuser électrique.

Selon un mode de réalisation de l'invention, les premier et deuxième conduits d'écoulement de vapeur sont logés dans la chambre interne délimitée par le couvercle.

Selon un mode de réalisation de l'invention, les premier et deuxième orifices d'admission de vapeur sont situés dans une moitié avant de la face inférieure du couvercle.

Selon un mode de réalisation de l'invention, les premier et deuxième orifices d'admission de vapeur sont situés à proximité d'un bord périphérique de la face inférieure du couvercle. Une telle disposition des premier et deuxième orifices d'admission de vapeur limite encore les risques d'écoulement d'eau bouillante hors de la machine à infuser électrique en cas de renversement de cette dernière.

Selon un mode de réalisation de l'invention, le couvercle est configuré pour être agencé au niveau de l'ouverture de remplissage supérieure.

Selon un mode de réalisation de l'invention, le contenant comporte le bec verseur.

Selon un mode de réalisation de l'invention, le couvercle est amovible par rapport au contenant.

Selon un mode de réalisation de l'invention, la machine à infuser électrique comporte un dispositif de fixation configuré pour fixer de manière amovible, c'est-à-dire de manière temporaire et réversible, le couvercle au contenant.

Selon un mode de réalisation de l'invention, le dispositif de fixation comprend au moins un organe de fixation, tel qu'une patte de fixation ou un doigt de fixation, prévu sur le couvercle et au moins un élément de fixation, tel qu'un logement de fixation, prévu sur le contenant, l'au moins un organe de fixation étant configuré pour occuper une position de fixation dans laquelle l'au moins un organe de fixation est configuré pour coopérer avec l'au moins un élément de fixation de manière à fixer le couvercle au contenant, et une position de libération dans laquelle l'au moins un organe de fixation est configuré pour libérer l'au moins un élément de fixation de telle sorte que le couvercle peut être retiré du contenant.

Selon un mode de réalisation de l'invention, l'au moins un organe de fixation est monté mobile par rapport au couvercle entre la position de fixation et la position de libération.

Selon un mode de réalisation de l'invention, le dispositif de fixation comporte un organe de rappel, tel qu'un ressort de rappel, configuré pour rappeler l'au moins un organe de fixation dans la position de fixation.

Selon un mode de réalisation de l'invention, la machine à infuser électrique comporte un mécanisme d'actionnement prévu sur le couvercle et configuré pour déplacer l'au moins organe de fixation dans la position de libération lorsque le mécanisme d'actionnement est actionné par un utilisateur.

Selon un mode de réalisation de l'invention, le mécanisme d'actionnement comporte un organe d'actionnement qui est actionnable manuellement par un utilisateur et qui est configuré pour déplacer l'au moins un organe de fixation de la position de fixation à la position de libération, l'organe d'actionnement étant monté mobile entre une première position d'actionnement et une deuxième position d'actionnement, l'organe d'actionnement et l'au moins un organe de fixation étant configurés de telle sorte qu'un déplacement de l'organe d'actionnement de la première position d'actionnement à la deuxième position d'actionnement entraîne un déplacement de l'au moins un organe de fixation de la position de fixation à la position de libération. Une telle configuration du mécanisme d'actionnement permet à un utilisateur de pouvoir déposer le couvercle par un simple actionnement du mécanisme d'actionnement.

Selon un mode de réalisation de l'invention, le couvercle comporte un conduit de versage configuré pour convoyer vers le bec verseur de l'eau contenue dans le volume interne, la machine à infuser électrique comprenant un obturateur monté mobile sur le couvercle entre une position d'obturation dans laquelle l'obturateur obture le conduit de versage et empêche un écoulement d'eau à travers le conduit de versage et une position d'ouverture dans laquelle l'obturateur libère le conduit de versage et autorise un écoulement d'eau à travers le conduit de versage. Une telle configuration du couvercle limite considérablement les risques d'écoulement d'eau à travers le bec verseur lorsque la machine à infuser électrique est renversée.

Selon un mode de réalisation de l'invention, le conduit de versage comporte une ouverture d'entrée d'eau débouchant dans la face inférieure du couvercle et une ouverture de sortie d'eau débouchant dans une surface périphérique externe du couvercle.

Selon un mode de réalisation de l'invention, l'au moins une ouverture d'évacuation de vapeur est située à proximité de l'ouverture de sortie d'eau.

Selon un mode de réalisation de l'invention, la machine à infuser électrique comporte un système d'actionnement prévu sur le couvercle et configuré pour déplacer l'obturateur entre la position d'ouverture et la position d'obturation.

Selon un mode de réalisation de l'invention, le système d'actionnement comporte un bouton d'actionnement actionnable par un utilisateur et mobile entre une première position de bouton et une deuxième position de bouton, le système d'actionnement étant configuré de telle sorte qu'un déplacement, par un utilisateur, du bouton d'actionnement de la première position de bouton à la deuxième position de bouton entraîne un déplacement de l'obturateur de la position d'obturation à la position d'ouverture.

Selon un mode de réalisation de l'invention, le contenant comporte un fond chauffant situé sous le volume interne et configuré pour chauffer l'eau contenue dans le volume interne.

Selon un mode de réalisation de l'invention, les premier et deuxième conduits d'écoulement de vapeur sont formés respectivement par des premier et deuxième tubes d'écoulement de vapeur. De façon avantageuse, chacun des premier et deuxième tubes d'écoulement de vapeur est formé d'un seul tenant et est monobloc.

### Brève description des figures

L'invention sera mieux comprise à l'aide de la description qui suit en référence aux dessins schématiques annexés représentant, à titre d'exemple non limitatif, une forme d'exécution de cette machine à infuser électrique.
Figure 1 est une vue en perspective de dessus d'une machine à infuser électrique selon l'invention.
Figure 2 est une vue partielle en perspective de dessus de la machine à infuser électrique de la figure 1.
Figure 3 est une vue partielle en perspective de dessus d'un contenant appartenant à la machine à infuser électrique de la figure 1.
Figure 4 est une vue en coupe longitudinale de la machine à infuser électrique de la figure 1.
Figure 5 est une vue, à l'échelle agrandie, d'un détail de la figure 4.
Figure 6 est une vue en perspective de dessus d'un couvercle de la machine à infuser électrique de la figure 1.
Figure 7 est une vue en perspective de dessus du couvercle de la figure 6.
Figure 8 est une vue en perspective de dessous du couvercle de la figure 6.
Figure 9 est une vue partielle en perspective de dessus du couvercle de la figure 6.
Figure 10 est une vue partielle en perspective de dessus du couvercle de la figure 6.
Figure 11 est une vue en perspective de dessous du couvercle de la figure 6 et d'un accessoire d'infusion appartenant à la machine à infuser électrique de la figure 1.
Figure 12 est une vue de dessus de l'accessoire d'infusion de la figure 11.
Figure 13 est une vue en perspective de dessus de l'accessoire d'infusion de la figure 11.
Figure 14 est une vue partielle de côté de la machine à infuser électrique de la figure 1 montrant la machine à infuser électrique renversée sur une surface horizontale et occupant une position stable dans laquelle une poignée de préhension de la machine à infuser électrique et le côté latéral gauche du contenant prennent appui sur la surface horizontale.
Figure 15 est une vue partielle de côté de la machine à infuser électrique de la figure 1 montrant la machine à infuser électrique renversée sur une surface horizontale et occupant une position stable dans laquelle une poignée de préhension de la machine à infuser électrique et le côté latéral droit du contenant prennent appui sur la surface horizontale.

### Description détaillée

On notera que dans ce document, les termes « horizontal », « vertical », « inférieur », « supérieur », « avant », « arrière » et « longitudinal » employés pour décrire la machine à infuser électrique font référence à cette machine à infuser électrique en situation d'usage, lorsqu'elle repose à plat sur un plan de travail.

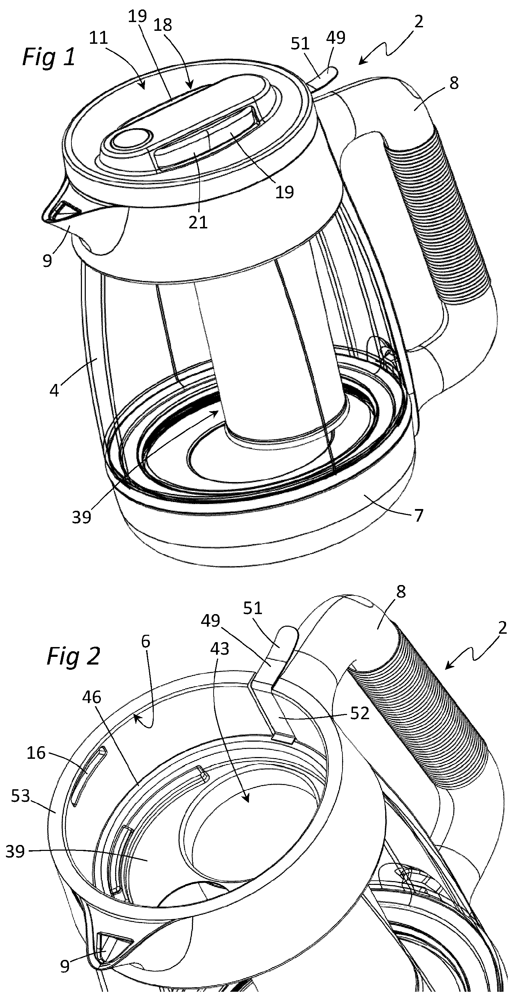

Les figures 1 à 15 représentent une machine à infuser électrique 2, et en particulier une bouilloire électrique, selon l'invention.

Dans la suite de la description, on entend par machine à infuser électrique un dispositif destiné à chauffer de l'eau à une température supérieure à 50°C, de préférence supérieure à 70°C, et permettant d'infuser un produit à infuser.

La machine à infuser électrique 2 comporte une base de support (non représentée sur les figures) configurée pour être alimentée électriquement par un cordon d'alimentation, et un contenant 4 configuré pour reposer sur la base de support.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant configuré pour être alimenté électriquement lorsque le contenant 4 repose sur la base de support.

La machine à infuser électrique 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être prévu sur le contenant 4 et être situé au niveau de l'ouverture de remplissage supérieure 6.

La machine à infuser électrique 2 comporte en outre un couvercle 11 configuré pour occuper une position de fermeture dans laquelle le couvercle 11 ferme le contenant 4, et plus particulièrement l'ouverture de remplissage supérieure 6. Le couvercle 11 est pourvu d'une face inférieure 12 configurée pour être située en regard du volume interne 5 du contenant 4.

La machine à infuser électrique 2 comporte de plus un dispositif de fixation configuré pour fixer de manière amovible, c'est-à-dire de manière temporaire et réversible, le couvercle 11 au contenant 4.

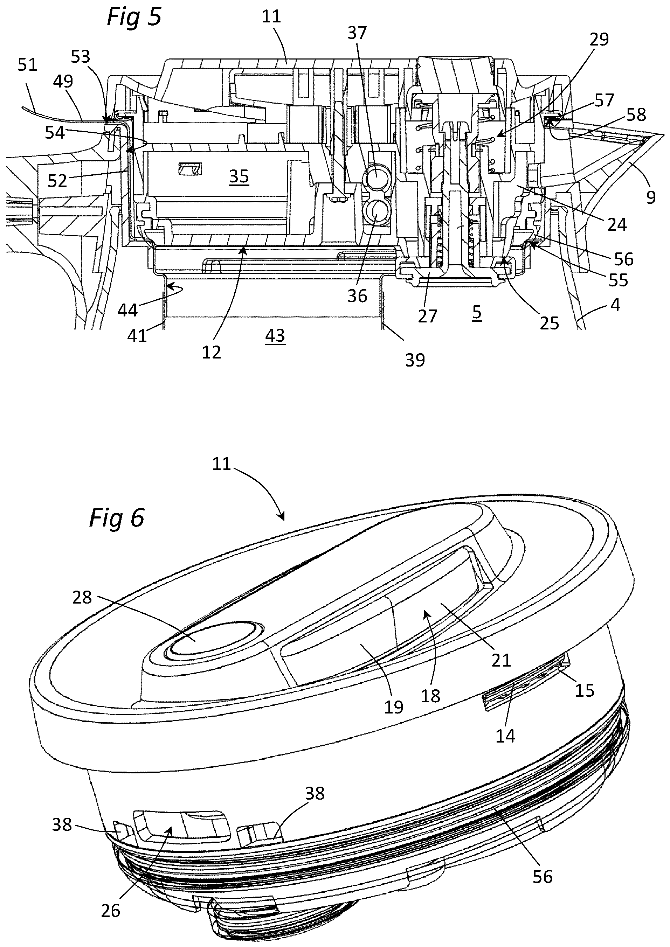

Selon le mode de réalisation représenté sur les figures, le dispositif de fixation comprend deux organes de fixation 14 (voir notamment les figures 6, 7 et 9), tels que des doigts de fixation, prévus sur le couvercle 11 et diamétralement opposés. Chaque organe de fixation 14 est logé dans le couvercle 11 et est configuré pour faire saillie hors du couvercle 11 à travers une ouverture traversante 15 respective prévue sur le couvercle 11.

Le dispositif de fixation comprend en outre deux éléments de fixation 16 (voir la figure 2), tels que des logements de fixation, prévus sur une surface interne du contenant 4 et situés à proximité de l'ouverture de remplissage supérieure 6. Selon le mode de réalisation représenté sur les figures, les organes de fixation 14 sont plus particulièrement configurés pour respectivement pénétrer dans les éléments de fixation 16 lorsque le couvercle 11 est fixé au contenant 4.

Selon le mode de réalisation représenté sur les figures, les organes de fixation 14 sont montés coulissants par rapport au couvercle 11 selon une direction de coulissement et entre une position de fixation dans laquelle chaque organe de fixation 14 est configuré pour coopérer avec l'élément de fixation 16 respectif de manière à fixer le couvercle 11 au contenant 4, et une position de libération dans laquelle chaque organe de fixation 14 est configuré pour libérer l'élément de fixation 16 respectif de telle sorte que le couvercle 11 peut être retiré du contenant 4. De façon avantageuse, la direction de coulissement s'étend sensiblement radialement par rapport à un axe central du couvercle 11.

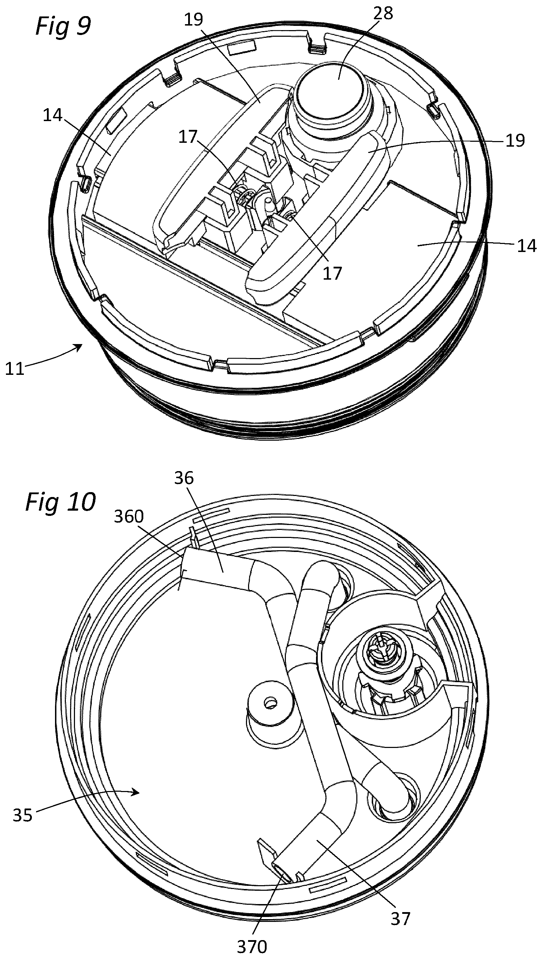

Le dispositif de fixation peut en outre comporter deux organes de rappel 17 (voir la figure 9) logés dans le couvercle 11 et configurés pour rappeler respectivement les organes de fixation 14 dans la position de fixation.

Comme montré plus particulièrement sur les figures 1 et 6, la machine à infuser électrique 2 comporte un mécanisme d'actionnement 18 prévu sur le couvercle 11 et configuré pour déplacer les organes de fixation 14 dans la position de libération lorsque le mécanisme d'actionnement 18 est actionné par un utilisateur.

Le mécanisme d'actionnement 18 comporte plus particulièrement deux organes d'actionnement 19 (voir les figures 1 et 9) qui sont actionnables manuellement par un utilisateur et qui sont configurés pour déplacer les organes de fixation 14 de la position de fixation à la position de libération. Selon le mode de réalisation représenté sur les figures, les organes d'actionnement 19 comportent respectivement deux parties de manipulation 21 qui sont accessibles depuis une face supérieure du couvercle 11 et qui sont configurées pour être manipulées par un utilisateur.

Les organes d'actionnement 19 sont montés coulissants par rapport au couvercle 11 entre une première position d'actionnement et une deuxième position d'actionnement, et les organes d'actionnement 19 et les organes de fixation 14 sont configurés de telle sorte qu'un déplacement des organes d'actionnement 19 de la première position d'actionnement à la deuxième position d'actionnement entraîne un déplacement des organes de fixation 14 de la position de fixation à la position de libération. De façon avantageuse, chaque organe d'actionnement 19 et l'organe de fixation 14 respectif sont fixés l'un à l'autre (et donc solidaire en mouvement), et les deux organes d'actionnement 19 sont configurés pour déplacer les organes de fixation 14 dans la position de libération par pincement des deux parties de manipulation 21, c'est-à-dire par un rapprochement des deux parties de manipulation 21 l'une de l'autre.

Le couvercle 11 comporte en outre un conduit de versage 24 (voir la figure 5) configuré pour convoyer vers le bec verseur 9 de l'eau contenue dans le volume interne 5. Le conduit de versage 24 comporte plus particulièrement une ouverture d'entrée d'eau 25 débouchant dans une moitié avant de la face inférieure 12 du couvercle 11, et une ouverture de sortie d'eau 26 débouchant dans une surface périphérique externe du couvercle 11 et destinée à être située sensiblement en regard du bec verseur 9 lorsque le couvercle 11 est fixé au contenant 4.

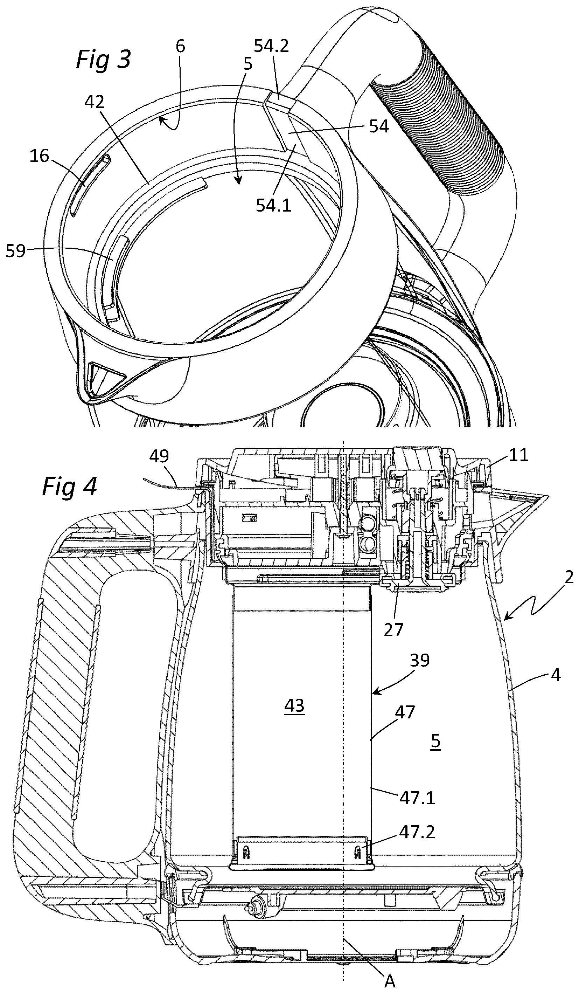

La machine à infuser électrique 2 comprend en outre un obturateur 27 (voir les figures 4, 5 et 8) monté mobile sur le couvercle 11 entre une position d'obturation dans laquelle l'obturateur 27 obture le conduit de versage 24 et empêche un écoulement d'eau à travers le conduit de versage 24, et une position d'ouverture dans laquelle l'obturateur 27 libère le conduit de versage 24 et autorise un écoulement d'eau à travers le conduit de versage 24.

La machine à infuser électrique 2 comporte de plus un système d'actionnement prévu sur le couvercle 11 et configuré pour déplacer l'obturateur 27 entre la position d'ouverture et la position d'obturation. Selon le mode de réalisation représenté sur les figures, le système d'actionnement comporte un bouton d'actionnement 28 actionnable par un utilisateur et mobile entre une première position de bouton et une deuxième position de bouton, le système d'actionnement étant configuré de telle sorte qu'un déplacement, par un utilisateur, du bouton d'actionnement 28 de la première position de bouton à la deuxième position de bouton entraîne un déplacement de l'obturateur 27 de la position d'obturation à la position d'ouverture.

Selon le mode de réalisation représenté sur les figures, le système d'actionnement comporte un dispositif de commande bistable 29, par exemple du type stylo à bille, configuré de telle sorte qu'un déplacement, par un utilisateur, du bouton d'actionnement 28 de la première position de bouton à la deuxième position de bouton entraîne un déplacement de l'obturateur 27 de la position d'obturation à la position d'ouverture, et de telle sorte qu'un déplacement, par un utilisateur, du bouton d'actionnement 28 de la deuxième position de bouton à la première position de bouton entraîne un déplacement de l'obturateur 27 de la position d'ouverture à la position d'obturation. Les première et deuxième positions de bouton correspondent donc à des positions stables du bouton d'actionnement 28.

La machine à infuser électrique 2 comporte également un circuit d'évacuation de vapeur configuré pour convoyer, à l'extérieur du volume interne 5 et par exemple vers l'extérieur de la machine à infuser électrique 2, de la vapeur générée dans le volume interne 5 lors d'une ébullition de l'eau contenue dans le volume interne 5.

Le circuit d'évacuation de vapeur comprend notamment un premier orifice d'admission de vapeur 33 et un deuxième orifice d'admission de vapeur 34 qui sont prévus sur le couvercle 11 et qui débouchent dans la face inférieure 12 du couvercle 11 et à proximité d'un bord périphérique de la face inférieure 12 du couvercle 11. Lorsque le couvercle 11 est fixé au contenant 4 et que ce dernier repose sur une surface horizontale, les premier et deuxième orifices d'admission de vapeur 33, 34 débouchent dans le volume interne 5 délimité par le contenant 4 et au-dessus d'un niveau de remplissage maximal du contenant 4.

Selon le mode de réalisation représenté sur les figures, les premier et deuxième orifices d'admission de vapeur 33, 34 sont disposés de part et d'autre d'un plan vertical médian P de la machine à infuser électrique 2 qui passe par le bec verseur 9 et la poignée de préhension 8, et sont situés dans la moitié avant de la face inférieure 12 du couvercle 11. De façon avantageuse, les premier et deuxième orifices d'admission de vapeur 33, 34 sont disposés de manière symétrique par rapport au plan vertical médian P de la machine à infuser électrique 2.

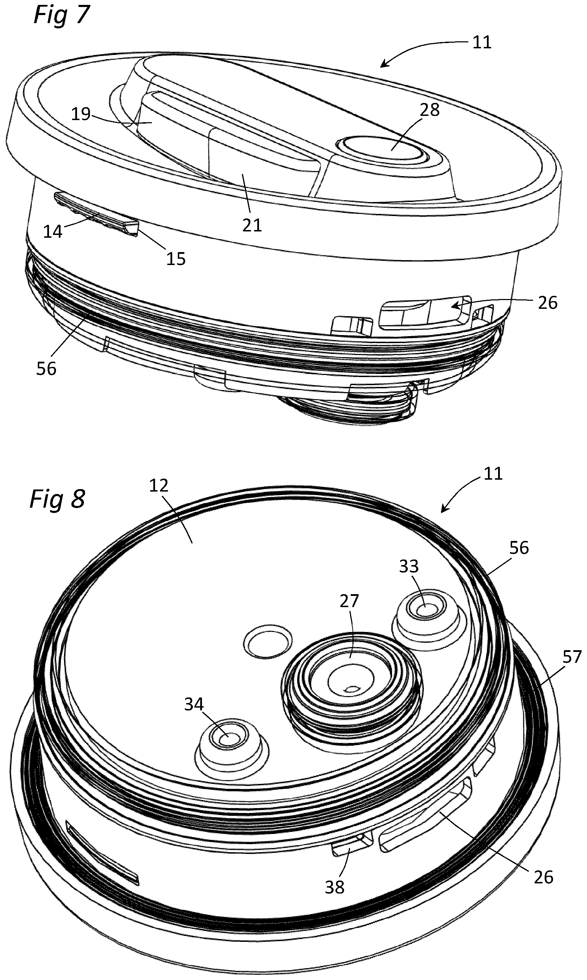

Comme montré plus particulièrement sur les figures 8, 10, 14 et 15, le circuit d'évacuation de vapeur comprend également :
- une chambre interne 35 délimitée par le couvercle 11,
- un premier conduit d'écoulement de vapeur 36 comprenant une première ouverture d'entrée de vapeur reliée fluidiquement au premier orifice d'admission de vapeur 33 et une première ouverture de sortie de vapeur 360 débouchant dans la chambre interne 35 délimitée par le couvercle 11, et
- un deuxième conduit d'écoulement de vapeur 37 comprenant une deuxième ouverture d'entrée de vapeur reliée fluidiquement au deuxième orifice d'admission de vapeur 34 et une deuxième ouverture de sortie de vapeur 370 débouchant dans la chambre interne 35.

Les premier et deuxième conduits d'écoulement de vapeur 36, 37 forment un dispositif anti-déversement, également nommé dispositif anti-débordement, configuré pour empêcher un déversement de l'eau contenue dans le volume interne 5 via le circuit d'évacuation de vapeur lorsque la machine à infuser électrique 2 est renversée.

Selon le mode de réalisation représenté sur les figures, et notamment comme visible à la figure 5, les premier et deuxième conduits d'écoulement de vapeur 36, 37 sont flexibles et sont logés dans la chambre interne 35. Les premier et deuxième conduits d'écoulement de vapeur 36, 37 peuvent par exemple être formés respectivement par des premier et deuxième tubes d'écoulement de vapeur qui sont avantageusement formés d'un seul tenant et donc monoblocs. Les premier et deuxième conduits d'écoulement de vapeur 36, 37 peuvent par exemple être configurés pour s'étendre sensiblement horizontalement lorsque le contenant 4 repose sur une surface horizontale.

De façon avantageuse, chacun des premier et deuxième conduits d'écoulement de vapeur 36, 37 présente une section transversale qui est circulaire et une section de passage qui est sensiblement constante le long de sa longueur.

Les première et deuxième ouvertures de sortie de vapeur 360, 370 sont plus particulièrement configurées pour être disposées de part et d'autre du plan vertical médian P de la machine à infuser électrique 2, et avantageusement pour être disposées de manière symétrique par rapport au plan vertical médian P de la machine à infuser électrique 2.

Selon le mode de réalisation représenté sur les figures, les première et deuxième ouvertures de sortie de vapeur 360, 370 sont situées dans une moitié arrière de la chambre interne 35, et sont configurées pour être orientées sensiblement à l'opposé du bec verseur 9, c'est-à-dire vers l'arrière de la machine à infuser électrique 2.

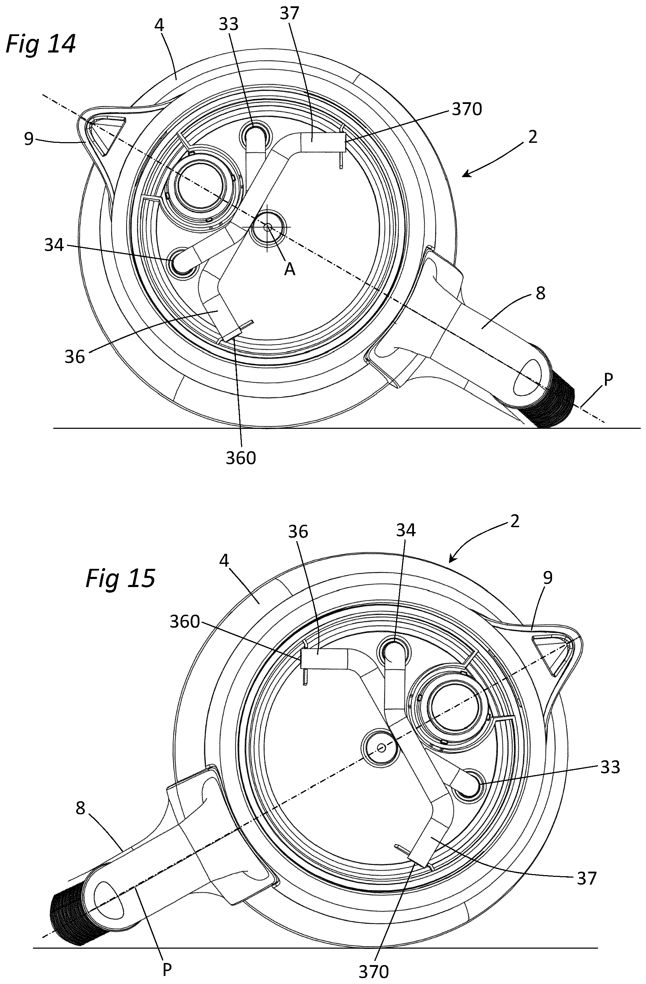

Comme montré plus particulièrement sur les figures 14 et 15, la machine à infuser électrique 2 est plus particulièrement configurée :
- de telle sorte que, lorsque la machine à infuser électrique 2 est renversée et que la poignée de préhension 8 et un premier côté latéral, à savoir le côté gauche, du contenant 4 reposent de manière stable sur une surface horizontale (voir la figure 14), le premier orifice d'admission de vapeur 33 et la deuxième ouverture de sortie de vapeur 370 sont situés au-dessus du niveau d'eau dans le volume interne 5, et
- de telle sorte que, lorsque la machine à infuser électrique 2 est renversée et que la poignée de préhension 8 et un deuxième côté latéral, à savoir le côté droit, du contenant 4 reposent de manière stable sur une surface horizontale (voir la figure 15), le deuxième orifice d'admission de vapeur 34 et la première ouverture de sortie de vapeur 360 sont situés au-dessus du niveau d'eau dans le volume interne 5.

Ainsi, la machine à infuser électrique 2 selon la présente invention permet d'éviter ou du moins de limiter considérablement les risques d'écoulement d'eau bouillante hors de la machine à infuser électrique 2 en cas de renversement de cette dernière, tout en permettant d'optimiser le volume de remplissage maximal du contenant 4.

Le circuit d'évacuation de vapeur comprend de plus plusieurs ouvertures d'évacuation de vapeur 38 prévues sur le couvercle 11 et reliées fluidiquement à la chambre interne 35 délimitée par le couvercle 11. Les ouvertures d'évacuation de vapeur 38 sont configurées pour permettre une évacuation de la vapeur contenue dans la chambre interne 35 vers l'extérieur de la machine à infuser électrique 2.

Selon le mode de réalisation représenté sur les figures, les ouvertures d'évacuation de vapeur 38 débouchent dans une surface périphérique externe du couvercle 11, et sont situées à proximité de l'ouverture de sortie d'eau 26. Les ouvertures d'évacuation de vapeur 38 sont donc configurées pour être situées à proximité du bec verseur 9 lorsque le couvercle 11 est fixé au contenant 4. Une telle configuration de la machine à infuser électrique 2 permet une évacuation de la vapeur hors du contenant 4 via le couvercle 11 et le bec verseur 9.

La machine à infuser électrique 2 comporte en outre un accessoire d'infusion 39, tel qu'un panier à infuser, configuré pour être disposé au moins en partie dans le volume interne 5 du contenant 4, et plus particulièrement pour être au moins en partie immergé dans l'eau contenue dans le volume interne 5. De façon avantageuse, l'accessoire d'infusion 39 est amovible par rapport au contenant 4.

L'accessoire d'infusion 39 comprend un corps principal 41 configuré pour reposer sur une partie de retenue 42 prévue sur le contenant 4 et pour être disposé au moins en partie dans le volume interne 5 du contenant 4. Selon le mode de réalisation représenté sur les figures, la partie de retenue 42 est annulaire et est formée par une nervure de retenue annulaire prévue sur une surface périphérique interne du contenant 4. De façon avantageuse, la nervure de retenue annulaire s'étend circonférentiellement autour de l'axe longitudinal central A. Selon une variante de réalisation de l'invention, la nervure de retenue annulaire pourrait être remplacée par exemple par deux nervures de retenue diamétralement opposées ou par un épaulement de retenue annulaire.

Le corps principal 41 délimite un volume d'infusion 43 configuré pour contenir un produit à infuser, tel que du thé, du café ou des plantes, et comporte une ouverture supérieure 44 à travers laquelle le produit à infuser est apte à être introduit dans le volume d'infusion 43.

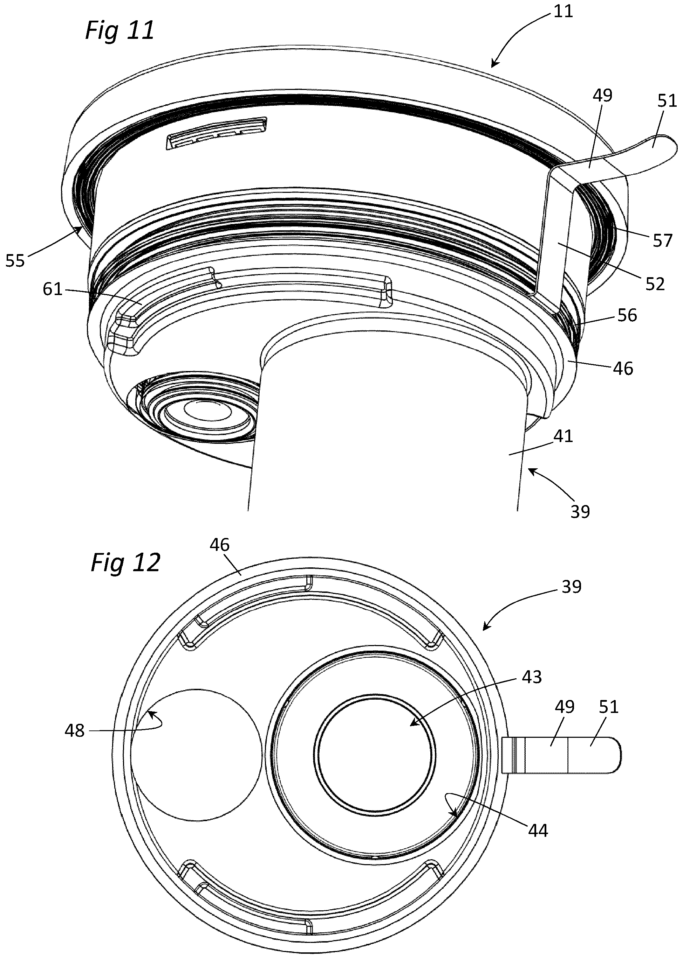

Comme montré sur les figures 11 à 13, le corps principal 41 comporte plus particulièrement une partie d'appui 46, telle qu'une collerette d'appui annulaire, configurée pour reposer sur la partie de retenue 42 prévue sur le contenant 4 et pour être située en regard de la face inférieure 12 du couvercle 11. De façon avantageuse, la partie d'appui 46 est sensiblement plane et est configurée pour s'étendre sensiblement perpendiculairement à l'axe longitudinal central A du contenant 4 lorsque la partie d'appui 46 repose sur la partie de retenue 42.

Selon le mode de réalisation représenté sur les figures, la partie d'appui 46 est en appui étanche contre la partie de retenue 42 lorsque l'accessoire d'infusion 39 est associé au contenant 4 et que le couvercle 11 est en position de fermeture. De façon avantageuse, la partie d'appui 46 comprend un épaulement propre à coopérer avec la partie de retenue 42 lorsque l'accessoire d'infusion 39 est associé au contenant 4 et à assurer une étanchéité entre la partie d'appui 46 et la partie de retenue 42 notamment lorsque le couvercle 11 est en position de fermeture. Le couvercle 11 est plus particulièrement propre à exercer un effort d'appui sur le corps principal 41 lorsque le couvercle est en position de fermeture, de telle sorte que la partie d'appui 46 exerce alors un effort d'appui contre la partie de retenue 42.

Le corps principal 41 comporte en outre une partie d'infusion 47 délimitant le volume d'infusion 43. Selon le mode de réalisation représenté sur les figures, la partie d'infusion 47 présente une forme globalement cylindrique, et comporte une paroi tubulaire 47.1 de section circulaire et pourvue d'une extrémité supérieure délimitant l'ouverture supérieure 44 et d'une extrémité inférieure opposée à l'extrémité supérieure, et un organe d'obturation 47.2 obturant l'extrémité inférieure de la paroi tubulaire 47.1.

De façon avantageuse, la corps principal 41 comporte une ouverture de passage 48 configurée pour être située en regard de l'obturateur 27 et pour permettre les déplacements de l'obturateur 27 entre la position d'ouverture et la position d'obturation.

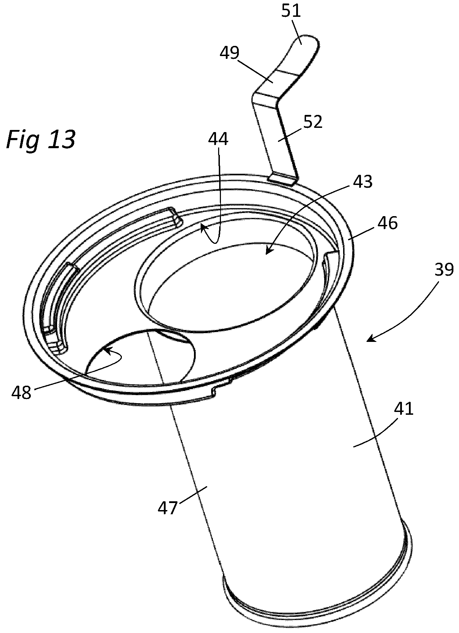

Comme montré plus particulièrement sur les figures 2 et 13, l'accessoire d'infusion 39 comporte en outre un organe de préhension 49 fixé à une partie supérieure du corps principal 41. Selon le mode de réalisation représenté sur les figures, l'organe de préhension 49 présente une forme générale en L.

L'organe de préhension 49 comporte plus particulièrement une partie de préhension 51, telle qu'une patte de préhension, configurée pour permettre à un utilisateur de manipuler l'accessoire d'infusion 39, et par exemple de retirer l'accessoire d'infusion 39 hors du contenant 4. La partie de préhension 51 est plus particulièrement configurée pour être située au moins en partie à l'extérieur de la machine à infuser électrique 2, c'est-à-dire pour être accessible depuis l'extérieur de la machine à infuser électrique 2, lorsque le couvercle 11 occupe la position de fermeture.

De façon avantageuse, la partie de préhension 51 est configurée pour s'étendre vers l'arrière de la machine à infuser électrique 2, et par exemple à l'opposé du bec verseur 9, et pour être décalée latéralement par rapport à l'ouverture supérieure 44.

L'organe de préhension 49 comporte en outre une partie de liaison 52 fixée à la partie supérieure du corps principal 41 et reliant mécaniquement la partie de préhension 51 au corps principal 41.

Selon le mode de réalisation représenté sur les figures, la partie de liaison 52 est configurée pour s'étendre entre la surface périphérique externe du couvercle 11 et la surface périphérique interne du contenant 4, et la partie de préhension 51 est configurée pour s'étendre partiellement entre le couvercle 11 et un bord périphérique supérieur 53 du contenant 4.

Comme montré notamment sur la figure 3, le contenant 4 comporte un évidement de réception 54, formant une zone de réception en creux, configuré pour loger au moins partiellement la partie de liaison 52. De façon avantageuse, l'évidement de réception 54 comporte une première partie de réception 54.1 débouchant dans la surface périphérique interne du contenant 4 et logeant la partie de liaison 52, et une deuxième partie de réception 54.2 débouchant dans le bord périphérique supérieur 53 du contenant 4 et logeant partiellement la partie de préhension 51. De façon avantageuse, l'évidement de réception 54 est prévu dans une partie arrière du contenant 4, et par exemple à proximité de la poignée de préhension 8.

Selon le mode de réalisation représenté sur les figures, la partie de liaison 52 est configurée pour être sensiblement affleurante ou pour être située en retrait de la surface périphérique interne du contenant 4, et la portion de la partie de préhension 51, qui est logée dans la deuxième partie de réception 54.2, est configurée pour être sensiblement affleurante ou pour être située en retrait du bord périphérique supérieur 53 du contenant 4.

La partie de liaison 52 peut par exemple être configurée pour s'étendre sensiblement verticalement lorsque le contenant 4 repose sur une surface horizontale, et la portion de la partie de préhension 51, logée dans la deuxième partie de réception 54.2, peut par exemple être configurée pour s'étendre sensiblement horizontalement lorsque le contenant 4 repose sur une surface horizontale.

La machine à infuser électrique 2 comporte également un dispositif d'étanchéité 55 configuré pour coopérer de manière étanche avec le contenant 4 et l'organe de préhension 49 lorsque le couvercle 11 occupe la position de fermeture.

Le dispositif d'étanchéité 55 comporte plus particulièrement un premier joint d'étanchéité annulaire 56 et un deuxième joint d'étanchéité annulaire 57 qui sont configurés pour être décalés l'un par rapport à l'autre selon un axe longitudinal central A du contenant 4 lorsque le couvercle 11 occupe la position de fermeture.

Selon le mode de réalisation représenté sur les figures, le premier joint d'étanchéité annulaire 56 est fixé à une partie inférieure du couvercle 11, et le deuxième joint d'étanchéité annulaire 57 est fixé à une partie supérieure du couvercle 11. De façon avantageuse, le premier joint d'étanchéité annulaire 56 et le deuxième joint d'étanchéité annulaire 57 s'étendent sensiblement coaxialement à un axe central du couvercle 11, et s'étendent respectivement autour de la partie inférieure et de la partie supérieure du couvercle 11.

Le premier joint d'étanchéité annulaire 56 est plus particulièrement configuré pour reposer sur et coopérer de manière étanche avec le corps principal 41 de l'accessoire d'infusion 39, et par exemple avec la partie d'appui 46 prévue sur le corps principal 41, lorsque le couvercle 11 occupe la position de fermeture, et le deuxième joint d'étanchéité annulaire 57 est plus particulièrement configuré pour reposer sur et coopérer de manière étanche avec le bord périphérique supérieur 53 du contenant 4 et l'organe de préhension 49, et par exemple la portion de la partie de préhension 51 qui est logée dans l'évidement de réception 54, lorsque le couvercle 11 occupe la position de fermeture.

En l'absence de l'accessoire d'infusion 39, le premier joint d'étanchéité annulaire 56 est configuré pour reposer sur et coopérer de manière étanche avec la partie de retenue 42, lorsque le couvercle 11 occupe la position de fermeture.

En l'absence de l'accessoire d'infusion 39, le deuxième joint d'étanchéité annulaire 57 est configuré pour reposer sur et coopérer de manière étanche avec le bord périphérique supérieur 53 et l'évidement de réception 54, lorsque le couvercle 11 occupe la position de fermeture.

Comme montré sur la figure 5, le couvercle 11 comporte une surface d'appui annulaire 58 contre laquelle prend appui le deuxième joint d'étanchéité annulaire 57, la surface d'appui annulaire 58 étant configurée pour être orientée vers le bord périphérique supérieur 53 du contenant 4 lorsque le couvercle 11 occupe la position de fermeture. De façon avantageuse, la portion de la partie de préhension 51, qui est logée dans l'évidement de réception 54, est configurée pour s'étendre entre la surface d'appui annulaire 58 prévue sur le couvercle 11 et le bord périphérique supérieur 53 du contenant 4.

En variante, le premier joint d'étanchéité annulaire 56 et le deuxième joint d'étanchéité annulaire 57 sont fixés au contenant 4 et notamment respectivement sur la partie de retenue 42 et le bord périphérique supérieur 53.

Selon le mode de réalisation représenté sur les figures, la machine à infuser électrique 2 comporte en outre un dispositif d'indexage angulaire configuré pour indexer angulairement l'accessoire d'infusion 39 par rapport au contenant 4, de manière à définir une unique position de retenue de l'accessoire d'infusion 39 sur le contenant 4 et donc à assurer une position optimale de l'accessoire d'infusion 39 permettant un déplacement du couvercle 11 dans la position de fermeture.

Comme montré sur les figures 3 et 11, le dispositif d'indexage angulaire comporte au moins un élément d'indexage 59, tel qu'un bossage d'indexage, prévu sur le contenant 4, et au moins un organe d'indexage 61, tel qu'un logement d'indexage, prévu sur le corps principal 41 et configuré pour coopérer avec l'au moins élément d'indexage 59 lorsque le corps principal 41 repose sur la partie de retenue 42.

Selon un autre mode de réalisation de l'invention non représenté sur les figures, la machine à infuser électrique 2 pourrait comporter un dispositif de contrôle électromécanique comportant un élément bimétallique, et le circuit d'évacuation de vapeur pourrait comporter au moins une ouverture d'évacuation de vapeur 38 qui est configurée pour diriger la vapeur contenue dans la chambre interne 35 vers l'élément bimétallique, le dispositif de contrôle électromécanique étant configuré de telle sorte qu'un afflux de vapeur sur l'élément bimétallique déclenche un arrêt de la chauffe de la machine à infuser électrique 2.

L'élément bimétallique peut par exemple être disposé dans la poignée de préhension 8. Dans ce cas, l'au moins une ouverture d'évacuation de vapeur 38 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 38 est prévue dans une partie arrière du couvercle 11 et est configurée pour être reliée fluidiquement à un tube vapeur qui est agencé dans le contenant 4 et qui est relié fluidiquement à l'élément bimétallique.

Selon une variante de réalisation de l'invention, l'évidement de réception 54 comprend un joint d'étanchéité additionnel propre à coopérer avec l'organe de préhension 49 lorsque l'accessoire d'infusion 39 est associé au contenant 4.

Bien entendu, la présente invention n'est nullement limitée aux modes de réalisation décrits et illustrés qui n'ont été donnés qu'à titre d'exemples, la présente invention est cependant définie par la portée des revendications.

## Revendications

1. Machine à infuser électrique (2) comprenant :
- un contenant (4) délimitant un volume interne (5) destiné à contenir de l'eau et dans lequel l'eau est destinée à être chauffée, le contenant (4) comprenant un bord périphérique supérieur (53) délimitant une ouverture de remplissage supérieure débouchant dans le volume interne,
- une poignée de préhension (8) fixée au contenant (4),
- un bec verseur (9),
- un accessoire d'infusion (39) qui est amovible par rapport au contenant (4), l'accessoire d'infusion (39) comprenant :
∘ un corps principal (41) configuré pour être disposé au moins en partie dans le volume interne (5) du contenant (4), le corps principal (41) délimitant un volume d'infusion (43) configuré pour contenir un produit à infuser, et
∘ un organe de préhension (49) fixé à une partie supérieure du corps principal (41) et comprenant une partie de préhension (51) configurée pour permettre à un utilisateur de manipuler l'accessoire d'infusion (39), et
- un couvercle (11) configuré pour occuper une position de fermeture dans laquelle le couvercle (11) ferme le contenant (4) et recouvre au moins en partie l'accessoire d'infusion (39), le couvercle (11) comprenant une face inférieure (12) configurée pour être située en regard du corps principal (41) de l'accessoire d'infusion (39), la partie de préhension (51) est configurée pour être située au moins en partie à l'extérieur de la machine à infuser électrique (2) lorsque le couvercle (11) occupe la position de fermeture, l'organe de préhension (49) comporte une partie de liaison (52) fixée à la partie supérieure du corps principal (41) et reliant mécaniquement la partie de préhension (51) au corps principal (41), la partie de liaison (52) étant configurée pour s'étendre entre le couvercle (11) et le contenant (4) lorsque le couvercle (11) occupe la position de fermeture, la machine à infuser électrique (2) comporte un dispositif d'étanchéité (55) configuré pour coopérer de manière étanche avec le contenant (4) et l'organe de préhension (49) lorsque le couvercle (11) occupe la position de fermeture, **caractérisé en ce que** le contenant (4) comporte un évidement de réception (54) configuré pour loger au moins partiellement la partie de liaison (52).

2. Machine à infuser électrique (2) selon la revendication 1, dans laquelle le dispositif d'étanchéité (55) comporte un premier joint d'étanchéité annulaire (56) et un deuxième joint d'étanchéité annulaire (57) qui sont configurés pour être décalés l'un par rapport à l'autre selon un axe longitudinal central (A) du contenant (4) lorsque le couvercle (11) occupe la position de fermeture.

3. Machine à infuser électrique (2) selon la revendication 2, dans laquelle le premier joint d'étanchéité annulaire (56) et le deuxième joint d'étanchéité annulaire (57) sont fixés au couvercle (11).

4. Machine à infuser électrique (2) selon la revendication 3, dans laquelle le premier joint d'étanchéité annulaire (56) est fixé à une partie inférieure du couvercle (11), et le deuxième joint d'étanchéité annulaire (57) est fixé à une partie supérieure du couvercle (11).

5. Machine à infuser électrique (2) selon l'une quelconque des revendications 2 à 4, dans laquelle le premier joint d'étanchéité annulaire (56) est configuré pour coopérer de manière étanche avec le corps principal (41) de l'accessoire d'infusion (39) lorsque le couvercle (11) occupe la position de fermeture, et le deuxième joint d'étanchéité annulaire (57) est configuré pour coopérer de manière étanche avec le contenant (4) et l'organe de préhension (49) lorsque le couvercle (11) occupe la position de fermeture.

6. Machine à infuser électrique (2) selon la revendication 5, dans laquelle le deuxième joint d'étanchéité annulaire (57) est configuré pour coopérer de manière étanche avec le bord périphérique supérieur (53) du contenant (4) et l'organe de préhension (49) lorsque le couvercle (11) occupe la position de fermeture.

7. Machine à infuser électrique (2) selon l'une quelconque des revendications 1 à 6, dans laquelle la partie de liaison (52) est configurée pour s'étendre au moins partiellement entre une surface périphérique externe du couvercle (11) et une surface périphérique interne du contenant (4).

8. Machine à infuser électrique (2) selon l'une quelconque des revendications 1 à 7, dans laquelle la partie de préhension (51) est configurée pour s'étendre vers l'arrière de la machine à infuser électrique (2).

9. Machine à infuser électrique (2) selon l'une quelconque des revendications 1 à 8, laquelle comporte un dispositif d'indexage angulaire configuré pour indexer angulairement l'accessoire d'infusion (39) par rapport au contenant (4), de manière à définir une unique position de retenue de l'accessoire d'infusion (39) sur le contenant (4).

10. Machine à infuser électrique (2) selon l'une quelconque des revendications 1 à 9, laquelle comporte un circuit d'évacuation de vapeur configuré pour convoyer, à l'extérieur du volume interne (5), de la vapeur générée dans le volume interne (5) lors d'une ébullition de l'eau contenue dans le volume interne (5).

11. Machine à infuser électrique (2) selon la revendication 10, dans laquelle le circuit d'évacuation de vapeur comporte :
- un premier orifice d'admission de vapeur (33) et un deuxième orifice d'admission de vapeur (34) qui sont prévus sur le couvercle (11) et qui débouchent dans la face inférieure (12) du couvercle (11), les premier et deuxième orifices d'admission de vapeur (33, 34) étant configurés pour être reliés fluidiquement au volume interne (5) délimité par le contenant (4), et pour être disposés de part et d'autre d'un plan vertical médian (P) de la machine à infuser électrique (2) qui passe par la poignée de préhension (8),
- une chambre interne (35) délimitée par le couvercle (11), et
- un premier conduit d'écoulement de vapeur (36) comprenant une première ouverture d'entrée de vapeur reliée fluidiquement au premier orifice d'admission de vapeur (33) et une première ouverture de sortie de vapeur (360) débouchant dans la chambre interne (35), et un deuxième conduit d'écoulement de vapeur (37) comprenant une deuxième ouverture d'entrée de vapeur reliée fluidiquement au deuxième orifice d'admission de vapeur (34) et une deuxième ouverture de sortie de vapeur (370) débouchant dans la chambre interne (35).

12. Machine à infuser électrique (2) selon la revendication 11, dans laquelle le circuit d'évacuation de vapeur comporte au moins une ouverture d'évacuation de vapeur (38) prévue sur le couvercle (11) et reliée fluidiquement à la chambre interne (35) délimitée par le couvercle (11), l'au moins une ouverture d'évacuation de vapeur (38) étant configurée pour permettre une évacuation de la vapeur contenue dans la chambre interne (35) à l'extérieur du couvercle (11).

13. Machine à infuser électrique (2) selon la revendication 11 ou 12, dans laquelle la machine à infuser électrique (2) est configurée de telle sorte que, lorsque la machine à infuser électrique (2) est renversée et que la poignée de préhension (8) et un premier côté latéral du contenant (4) reposent de manière stable sur une surface horizontale, le premier orifice d'admission de vapeur (33) est situé au-dessus du niveau d'eau dans le volume interne (5), et de telle sorte que, lorsque la machine à infuser électrique (2) est renversée et que la poignée de préhension (8) et un deuxième côté latéral du contenant (4) reposent de manière stable sur une surface horizontale, le deuxième orifice d'admission de vapeur (34) est situé au-dessus du niveau d'eau dans le volume interne (5).

## Patentansprüche

1. Elektrische Brühmaschine (2), umfassend:
• einen Behälter (4), der ein Innenvolumen (5) begrenzt, das dazu bestimmt ist, Wasser aufzunehmen und in dem das Wasser erhitzt werden soll, wobei der Behälter (4) einen oberen umlaufenden Rand (53) aufweist, der eine obere Befüllungsöffnung begrenzt, die in das Innenvolumen mündet,
• einen am Behälter (4) befestigten Griff (8),
• einen Ausguss (9),
• ein Infusionszubehör (39), das gegenüber dem Behälter (4) abnehmbar ist, wobei das Infusionszubehör (39) umfasst:
∘ einen Hauptkörper (41), der dazu ausgelegt ist, zumindest teilweise im Innenvolumen (5) des Behälters (4) angeordnet zu werden, wobei der Hauptkörper (41) ein Infusionsvolumen (43) begrenzt, das dazu ausgelegt ist, ein zu infundierendes Produkt aufzunehmen, und
∘ ein an einem oberen Teil des Hauptkörpers (41) befestigtes Greiforgan (49), das einen Greifteil (51) umfasst, der dazu ausgelegt ist, einem Benutzer die Handhabung des Infusionszubehörs (39) zu ermöglichen, und
• einen Deckel (11), der dazu ausgelegt ist, eine Schließstellung einzunehmen, in der der Deckel (11) den Behälter (4) verschließt und das Infusionszubehör (39) zumindest teilweise abdeckt, wobei der Deckel (11) eine Unterseite (12) aufweist, die dazu ausgelegt ist, dem Hauptkörper (41) des Infusionszubehörs (39) gegenüberzuliegen,
wobei der Greifteil (51) dazu ausgelegt ist, sich zumindest teilweise außerhalb der elektrischen Brühmaschine (2) zu befinden, wenn der Deckel (11) die Schließstellung einnimmt, wobei das Greiforgan (49) einen Verbindungsteil (52) aufweist, der am oberen Teil des Hauptkörpers (41) befestigt ist und den Greifteil (51) mechanisch mit dem Hauptkörper (41) verbindet, wobei der Verbindungsteil (52) dazu ausgelegt ist, sich zwischen dem Deckel (11) und dem Behälter (4) zu erstrecken, wenn der Deckel (11) die Schließstellung einnimmt, wobei die elektrische Brühmaschine (2) eine Dichtungsvorrichtung (55) aufweist, die dazu ausgelegt ist, mit dem Behälter (4) und dem Greiforgan (49) dicht zusammenzuwirken, wenn der Deckel (11) die Schließstellung einnimmt, **dadurch gekennzeichnet, dass** der Behälter (4) eine Aufnahmeausnehmung (54) aufweist, die dazu ausgelegt ist, den Verbindungsteil (52) zumindest teilweise aufzunehmen.

2. Elektrische Brühmaschine (2) nach Anspruch 1, wobei die Dichtungsvorrichtung (55) einen ersten ringförmigen Dichtungsring (56) und einen zweiten ringförmigen Dichtungsring (57) aufweist, die dazu ausgelegt sind, entlang einer zentralen Längsachse (A) des Behälters (4) gegeneinander versetzt zu sein, wenn der Deckel (11) die Schließstellung einnimmt.

3. Elektrische Brühmaschine (2) nach Anspruch 2, wobei der erste ringförmige Dichtungsring (56) und der zweite ringförmige Dichtungsring (57) am Deckel (11) befestigt sind.

4. Elektrische Brühmaschine (2) nach Anspruch 3, wobei der erste ringförmige Dichtungsring (56) an einem unteren Teil des Deckels (11) befestigt ist und der zweite ringförmige Dichtungsring (57) an einem oberen Teil des Deckels (11) befestigt ist.

5. Elektrische Brühmaschine (2) nach einem der Ansprüche 2 bis 4, wobei der erste ringförmige Dichtungsring (56) dazu ausgelegt ist, mit dem Hauptkörper (41) des Infusionszubehörs (39) dicht zusammenzuwirken, wenn der Deckel (11) die Schließstellung einnimmt, und der zweite ringförmige Dichtungsring (57) dazu ausgelegt ist, mit dem Behälter (4) und dem Greiforgan (49) dicht zusammenzuwirken, wenn der Deckel (11) die Schließstellung einnimmt.

6. Elektrische Brühmaschine (2) nach Anspruch 5, wobei der zweite ringförmige Dichtungsring (57) dazu ausgelegt ist, mit dem oberen umlaufenden Rand (53) des Behälters (4) und dem Greiforgan (49) dicht zusammenzuwirken, wenn der Deckel (11) die Schließstellung einnimmt.

7. Elektrische Brühmaschine (2) nach einem der Ansprüche 1 bis 6, wobei der Verbindungsteil (52) dazu ausgelegt ist, sich zumindest teilweise zwischen einer äußeren Umfangsfläche des Deckels (11) und einer inneren Umfangsfläche des Behälters (4) zu erstrecken.

8. Elektrische Brühmaschine (2) nach einem der Ansprüche 1 bis 7, wobei der Greifteil (51) dazu ausgelegt ist, sich nach hinten der elektrischen Brühmaschine (2) zu erstrecken.

9. Elektrische Brühmaschine (2) nach einem der Ansprüche 1 bis 8, die eine Winkelindexiervorrichtung aufweist, die dazu ausgelegt ist, das Infusionszubehör (39) gegenüber dem Behälter (4) winkelmäßig zu indexieren, um eine einzige Halteposition des Infusionszubehörs (39) am Behälter (4) festzulegen.

10. Elektrische Brühmaschine (2) nach einem der Ansprüche 1 bis 9, die einen Dampfabführkreislauf aufweist, der dazu ausgelegt ist, außerhalb des Innenvolumens (5) Dampf zu fördern, der im Innenvolumen (5) beim Sieden des im Innenvolumen (5) enthaltenen Wassers erzeugt wird.

11. Elektrische Brühmaschine (2) nach Anspruch 10, wobei der Dampfabführkreislauf umfasst:
• eine erste Dampfeinlassöffnung (33) und eine zweite Dampfeinlassöffnung (34), die am Deckel (11) vorgesehen sind und in die Unterseite (12) des Deckels (11) münden, wobei die erste und die zweite Dampfeinlassöffnung (33, 34) dazu ausgelegt sind, strömungstechnisch mit dem vom Behälter (4) begrenzten Innenvolumen (5) verbunden zu sein und beidseits einer mittleren vertikalen Ebene (P) der elektrischen Brühmaschine (2), die durch den Griff (8) verläuft, angeordnet zu sein,
• eine vom Deckel (11) begrenzte Innenkammer (35), und
• einen ersten Dampfströmungskanal (36), der eine erste Dampfeintrittsöffnung aufweist, die strömungstechnisch mit der ersten Dampfeinlassöffnung (33) verbunden ist, sowie eine erste Dampfaustrittsöffnung (360), die in die Innenkammer (35) mündet, und einen zweiten Dampfströmungskanal (37), der eine zweite Dampfeintrittsöffnung aufweist, die strömungstechnisch mit der zweiten Dampfeinlassöffnung (34) verbunden ist, sowie eine zweite Dampfaustrittsöffnung (370), die in die Innenkammer (35) mündet.

12. Elektrische Brühmaschine (2) nach Anspruch 11, wobei der Dampfabführkreislauf mindestens eine Dampfabführöffnung (38) aufweist, die am Deckel (11) vorgesehen und strömungstechnisch mit der vom Deckel (11) begrenzten Innenkammer (35) verbunden ist, wobei die mindestens eine Dampfabführöffnung (38) dazu ausgelegt ist, den in der Innenkammer (35) enthaltenen Dampf nach außen aus dem Deckel (11) abzuführen.

13. Elektrische Brühmaschine (2) nach Anspruch 11 oder 12, wobei die elektrische Brühmaschine (2) so ausgelegt ist, dass, wenn die elektrische Brühmaschine (2) umgekippt ist und der Griff (8) sowie eine erste Seitenfläche des Behälters (4) stabil auf einer horizontalen Fläche aufliegen, die erste Dampfeinlassöffnung (33) oberhalb des Wasserspiegels im Innenvolumen (5) angeordnet ist, und dass, wenn die elektrische Brühmaschine (2) umgekippt ist und der Griff (8) sowie eine zweite Seitenfläche des Behälters (4) stabil auf einer horizontalen Fläche aufliegen, die zweite Dampfeinlassöffnung (34) oberhalb des Wasserspiegels im Innenvolumen (5) angeordnet ist.

## Claims

1. Electric brewing machine (2) comprising:
• a container (4) defining an internal volume (5) intended to contain water and in which the water is intended to be heated, the container (4) comprising an upper peripheral rim (53) defining an upper filling opening opening into the internal volume,
• a gripping handle (8) fixed to the container (4),
• a pouring spout (9),
• an infusion accessory (39) which is removable relative to the container (4), the infusion accessory (39) comprising:
∘ a main body (41) configured to be disposed at least partly in the internal volume (5) of the container (4), the main body (41) defining an infusion volume (43) configured to contain a product to be infused, and
∘ a gripping member (49) fixed to an upper part of the main body (41) and comprising a gripping portion (51) configured to allow a user to handle the infusion accessory (39), and
• a lid (11) configured to occupy a closing position in which the lid (11) closes the container (4) and covers at least partly the infusion accessory (39), the lid (11) comprising a lower face (12) configured to be located opposite the main body (41) of the infusion accessory (39),
the gripping portion (51) being configured to be located at least partly outside the electric brewing machine (2) when the lid (11) occupies the closing position, the gripping member (49) comprising a connecting portion (52) fixed to the upper part of the main body (41) and mechanically connecting the gripping portion (51) to the main body (41), the connecting portion (52) being configured to extend between the lid (11) and the container (4) when the lid (11) occupies the closing position, the electric brewing machine (2) comprising a sealing device (55) configured to sealingly cooperate with the container (4) and the gripping member (49) when the lid (11) occupies the closing position, **characterized in that** the container (4) comprises a receiving recess (54) configured to accommodate at least partially the connecting portion (52).

2. Electric brewing machine (2) according to claim 1, wherein the sealing device (55) comprises a first annular sealing gasket (56) and a second annular sealing gasket (57) which are configured to be offset relative to one another along a central longitudinal axis (A) of the container (4) when the lid (11) occupies the closing position.

3. Electric brewing machine (2) according to claim 2, wherein the first annular sealing gasket (56) and the second annular sealing gasket (57) are fixed to the lid (11).

4. Electric brewing machine (2) according to claim 3, wherein the first annular sealing gasket (56) is fixed to a lower part of the lid (11), and the second annular sealing gasket (57) is fixed to an upper part of the lid (11).

5. Electric brewing machine (2) according to any one of claims 2 to 4, wherein the first annular sealing gasket (56) is configured to sealingly cooperate with the main body (41) of the infusion accessory (39) when the lid (11) occupies the closing position, and the second annular sealing gasket (57) is configured to sealingly cooperate with the container (4) and the gripping member (49) when the lid (11) occupies the closing position.

6. Electric brewing machine (2) according to claim 5, wherein the second annular sealing gasket (57) is configured to sealingly cooperate with the upper peripheral rim (53) of the container (4) and the gripping member (49) when the lid (11) occupies the closing position.

7. Electric brewing machine (2) according to any one of claims 1 to 6, wherein the connecting portion (52) is configured to extend at least partially between an outer peripheral surface of the lid (11) and an inner peripheral surface of the container (4).

8. Electric brewing machine (2) according to any one of claims 1 to 7, wherein the gripping portion (51) is configured to extend towards the rear of the electric brewing machine (2).

9. Electric brewing machine (2) according to any one of claims 1 to 8, comprising an angular indexing device configured to angularly index the infusion accessory (39) relative to the container (4), so as to define a single retaining position of the infusion accessory (39) on the container (4).

10. Electric brewing machine (2) according to any one of claims 1 to 9, comprising a steam evacuation circuit configured to convey, outside the internal volume (5), steam generated in the internal volume (5) during boiling of the water contained in the internal volume (5).

11. Electric brewing machine (2) according to claim 10, wherein the steam evacuation circuit comprises:
• a first steam inlet opening (33) and a second steam inlet opening (34) which are provided on the lid (11) and open into the lower face (12) of the lid (11), the first and second steam inlet openings (33, 34) being configured to be fluidly connected to the internal volume (5) defined by the container (4), and to be arranged on either side of a median vertical plane (P) of the electric brewing machine (2) passing through the gripping handle (8),
• an internal chamber (35) defined by the lid (11), and
• a first steam flow duct (36) comprising a first steam inlet opening fluidly connected to the first steam inlet opening (33) and a first steam outlet opening (360) opening into the internal chamber (35), and a second steam flow duct (37) comprising a second steam inlet opening fluidly connected to the second steam inlet opening (34) and a second steam outlet opening (370) opening into the internal chamber (35).

12. Electric brewing machine (2) according to claim 11, wherein the steam evacuation circuit comprises at least one steam evacuation opening (38) provided on the lid (11) and fluidly connected to the internal chamber (35) defined by the lid (11), the at least one steam evacuation opening (38) being configured to allow evacuation of the steam contained in the internal chamber (35) to the outside of the lid (11).

13. Electric brewing machine (2) according to claim 11 or 12, wherein the electric brewing machine (2) is configured such that, when the electric brewing machine (2) is overturned and the gripping handle (8) and a first lateral side of the container (4) rest stably on a horizontal surface, the first steam inlet opening (33) is located above the water level in the internal volume (5), and such that, when the electric brewing machine (2) is overturned and the gripping handle (8) and a second lateral side of the container (4) rest stably on a horizontal surface, the second steam inlet opening (34) is located above the water level in the internal volume (5).
